# EUROPÄISCHE PATENTSCHRIFT

(11) **EP 1 106 768 B1**
(45) Veröffentlichungstag und Bekanntmachung des Hinweises auf die Patenterteilung: **24.02.2010**
(21) Anmeldenummer: 00124799.8
(22) Anmeldetag: 14.11.2000
(51) Int. Cl.: E05F 5/02, E05F 5/08, E05F 3/14, F16F 7/08, F16F 9/10, F16F 9/12, A47B 88/04

(54) **Brems- und Dämpfungselement für Möbel zum kontrollierten Abbremsen einer bewegte Masse sowie Verwendung des Brems- und Dämpfungselementes**
Braking and damping element for furniture for controlled braking of a moving mass and use of said braking and damping element
Èlement de freinage et d'amortissement pour meuble pour freiner une masse mobile et utilisation de cet élement de freinage et d'amortissement

(30) Priorität: 07.12.1999 DE 19959051
(43) Veröffentlichungstag der Anmeldung: 13.06.2001
(73) Patentinhaber: Grass GmbH, 6973 Höchst/Vlbg. (AT)
(72) Erfinder: Müller, Wolfgang, 6890 Lustenau (AT)
(74) Vertreter: Riebling, Peter

(56) Entgegenhaltungen:
- DE-A- 19 717 937
- DE-U- 20 010 282
- DE-U- 29 913 854
- JP-A- 9 157 450
- US-A- 4 339 339
- US-A- 4 550 470
- US-A- 4 638 528
- US-A- 4 828 344
- US-A- 4 893 522
- US-A- 5 135 294

## Beschreibung

Die Erfindung betrifft ein Brems- und Dämpfungselement für Möbel zum kontrollierten Abbremsen einer bewegten Masse sowie Verwendung des Brems- und Dämpfungselementes nach dem Oberbegriff des unabhängigen Patentanspruches 1.

Brems- und Dämpfungselemente sind in vielfältigen Ausführungsformen in der Technik bekannt und werden in den unterschiedlichsten Anwendungsgebieten eingesetzt.

So sind unter anderem hydraulische Stoßdämpfer bekannt, die eine Kolben-ZylinderAnordnung aufweisen mit zwei Arbeitskammern, zwischen welchen ein flüssiges Medium strömt, das den Bremseffekt bewirkt. Derartige Dämpfer haben eine hohe Haftreibung, bedingt durch Kolbenstangen- und Kolbenabdichtungen, die einer sinnvollen Reduktion der Baugröße Grenzen setzt. Ferner sind sie sehr aufwendig und teuer in der Herstellung und werden daher nur für spezielle Anwendungen eingesetzt, bei denen Kosten eine untergeordnete Rolle spielen.

Bei Möbeln, insbesondere Schubladen und Möbeltüren, werden ebenfalls auf Reibung basierende Brems- und Dämpfungselemente meist in Verbindung mit Federelementen eingesetzt. Derartige Bremselemente sind in der DE 199 15 164 A1 oder der DE 197 17 937 A1 offenbart.

Diese Reibungsbremselemente können durch ihre hohe Haftreibung zum sogenannten Stip-Slick-Effekt führen, der sich durch Rattern, Steckenbleiben usw. des abzubremsenden Teils bemerkbar macht. Ebenso spielt der Verschleiß bei Reibungsdämpfern eine große Rolle, insbesondere wenn Massen mit hoher kinetischer Energie abgebremst werden müssen.

Die DE 29913854 U1 offenbart eine Bremsverzögerungseinrichtung nach dem Oberbegriff des Patentanspruches 1, wobei auf der Wandung des Zylinders ein Fett mit hoher Viskosität aufgetragen ist.

Fette bestehen aus Öl mit einem Eindickmittel (z.B. Seife, Bentonit, Polyharnstoff, PTFE), das bei Raumtemperatur von etwa 20°C nicht flüssig, sondern pastös ist. Fette sind Ester des dreiwertigen Alkohols Glycerin (Propan-1,2,3-triol) mit drei Fettsäuren. Fette werden nicht über die Viskosität definiert, sondern über die Eindringtiefe eines Normkegels (Konsistenzklasse). Die Viskosität von Glycerin als Hauptbestandteil der Fette liegt bei etwa 1,48 Pa*s.

Die Aufgabe der Erfindung ist es, ein geeignetes Brems- und Dämpfungselement zum Abbremsen einer bewegten Masse vorzuschlagen, das einfach und preisgünstig ist und das es erlaubt, die bewegte Masse über einer bestimmten Wegstrecke mit einstellbarer Bremscharakteristik nahezu verschleißfrei abzubremsen.

Die Lösung dieser Aufgabe erfolgt erfindungsgemäß durch die Merkmale des unabhängigen Patentanspruches 1.

Der Kern der Erfindung liegt darin, daß das hochviskose Medium eine Viskosität von etwa zehntausend bis mehreren Millionen Pa.s besitzt.

Grundlage ist, dass eine oder mehrere mit einem, eine hochviskose Flüssigkeit beinhaltenden, Medium benetzte Oberflächen jeweils eines feststehenden und eines beweglichen Teils des Brems- und Dämpfungselements nach Auftreffen der Masse auf das bewegliche Teil um eine bestimmte Wegstrecke gegeneinander verschoben werden, so daß das flüssigkeitsbeinhaltende Medium durch seine Haftung an den Oberflächen einer inneren Molekularreibung ausgesetzt wird, wobei die kinetische Energie der abzufangenden Masse in Reibungswärme umgesetzt wird.

Mit der Erfindung kann eine in mit hoher Geschwindigkeit, manuell oder durch Fremdenergie bewegte, linear geführte oder drehend gelagerte Masse in der Art abgefangen werden, daß die kinetische Energie der Masse über einen vorwählbaren Weg und über eine durch konstruktive Auslegung vorwählbare Dämpfungskennlinie rückstoßfrei in überwiegend Reibungswärme umgewandelt wird. Sofern gewünscht, kann der verbleibende Weg bis zu einem vorgegebenen Endanschlag mit einer bestimmten, durch die konstruktive Auslegung vorwählbaren, Bremswirkung mit sehr geringer Haftreibung ohne Stip-Slick-Effekt, wahlweise durch Federkraft unterstützt, zurückgelegt werden.

Vorteilhafte Ausgestaltungen und Weiterbildungen der Erfindung sind in den abhängigen Patentansprüchen angegeben.

Zwischen den zueinanderbewegbaren Teilen wird erfindungsgemäß ein Medium eingesetzt, dessen Reibungszahl von der Geschwindigkeit der gegeneinander bewegten Teile, d. h. von der Geschwindigkeit der abzubremsenden Masse, abhängt. Dies wird durch den Einsatz von hochviskosen Medien mit einer Viskosität von etwa zehntausend bis mehreren Millionen Pa.s erreicht.

Dadurch, daß die Reibungszahl bei kleineren Geschwindigkeiten gering ist, muß nach dem Abbremsen der Masse lediglich eine geringe Kraft, z. B. eine Federkraft, aufgebracht werden, um die Masse bis zu einem vorgesehenen Endanschlag zu bewegen.

In vorteilhafter Weise kann der Dämpfungsverlauf über die Wegstrecke durch Verändern des Abstandes und/oder Verändern der Oberflächenform der Oberflächen verändert werden. Durch axiale Profilierung, d. h. Profilierung in Bewegungsrichtung des beweglichen Teils, wird der Verlauf des Maßes des Spaltes zwischen den "Reibungsflächen" in Abhängigkeit des Weges der Masse gesteuert, was zu einer frei wählbaren Dämpfungskurve (progressiv, degressiv, linear, spezifisches Verhalten) führt. Durch radiale Profilierung wird z. B. die Oberfläche der beiden gegeneinander verschobenen Teile vergrößert, was eine geringere Baugröße der Konstruktion zuläßt. Die axiale Profilierung in Kombination mit der radialen Profilierung führt zu kleiner Bauform mit optimierter Dämpfungskennlinie.

In einer bevorzugten Ausgestaltung der Erfindung weist eines der Teile, z. B. das feststehende Teil des Brems- und Dämpfungselements, eine Ausnehmung beliebigen Querschnitts auf, in welcher das im wesentlichen denselben Querschnitt aufweisende andere Teil, z. B. das bewegliche Teil, verschiebbar gehalten ist, wobei zwischen der Oberfläche der Ausnehmung und der Oberfläche des beweglichen Teils ein Spalt vorhanden ist, in welchem sich das Medium befindet. Dabei ist der größte Durchmesser des einen Teils um die doppelte Spaltbreite geringer, als der kleinste Durchmesser der Ausnehmung, in der es geführt ist.

Dabei können die Ausnehmung und/oder die Oberfläche des beweglichen Teils axial und/oder radial profiliert sein, womit die Baugröße und/oder Dämpfungscharakteristik beeinflußt werden kann.

In einer anderen Ausgestaltung der Erfindung weist das Brems- und Dämpfungselement mehrere gegeneinander bewegliche Lamellen auf. Durch den Einsatz von mehreren dünnen, paarweise angeordneten und miteinander verbundenen flachen Lamellenelementen kann eine Erhöhung der wirksamen Oberfläche bei minimaler Bauform erzielt werden. Die flachen Elemente können auch in allen Dimensionen profiliert sein, zur Steuerung der Dämpfungskennlinie.

Eine andere Ausführung des Brems- und Dämpfungselements weist die Bauform einer Backenbremse in Innen- oder Außenbackenform auf. Die wirksamen Oberflächen können ähnlich einer Backenbremse durch mindestens zwei Brems- und Dämpfungselemente durch fixiertes Spaltmaß oder, insbesondere auch durch gesteuertes Spaltmaß oder Spaltpressung, gegen eine feststehende Fläche gepreßt werden. Diese Konstruktion eignet sich zur Ausführung als Innen- oder Außenbackenbremse.

Wie bereits erwähnt, können die Oberflächen der Lamellen und/oder Bremsbacken und/oder die jeweiligen Gegenflächen profiliert sein.

Eine weitere Ausführungsform sieht anstelle eines linear bewegten Brems- und Dämpfungselements vor, daß das bewegliche Teil als ein in dem feststehenden Teil rotierendes Rotationsteil ausgebildet ist. Das bewegliche Teil führt also eine Rotationsbewegung aus, welche durch die auftreffende Masse hervorgerufen wird, Eventuell muß dazu zwischen bewegter Masse und beweglichem Teil ein Umlenkmechanismus vorgesehen werden.

Nach dem durchgeführten Brems- und Dämpfungsvorgang kann vorgesehen sein, das Brems- und Dämpfungselement wieder in seine Ausgangsstellung zurückzuführen. Dies wird erfindungsgemäß durch ein auf das bewegliche Teil wirkendes Rückstellorgan erreicht.

In vorteilhafter Weise ist das Rückstellorgan als Federelement ausgebildet. Dabei kann es sich um eine separate Zug- oder Druckfeder handeln, die am aktiven Teil angreift und das Brems- und Dämpferelement mit einer geringen Kraft für den nächsten Brems- und Dämpfvorgang zurückstellt. Die Rückstellkraft kann sehr gering gewählt werden, da bei vielen Anwendungsfällen ausreichend Zeit zur Verfügung steht, um die Rückstellung für den nächsten Brems- und Dämpfvorgang zu bewerkstelligen.

Ferner ist in einer Weiterbildung der Erfindung vorgesehen, daß ein Rückstellfreilauf zur zwangsweisen Aufhebung der Bremswirkung vorhanden ist. Der Rückstellfreilauf wird z. B. durch zwangsgesteuerte Entlastung der Flächenpressung oder Vergrößerung des Flächenabstandes zwischen den beiden Teilen erreicht. Zum Rückzug der abzubremsenden Masse kann aus anwendungstechnischen Gründen eine Brems- und Dämpfungswirkung unerwünscht sein, so daß ein Freilauf benötigt wird. Das wird dadurch erreicht, daß das die Dämpfwirkung verursachende Flächenpaar im Spaltmaß richtungsabhängig verändert wird.

Ferner kann ein Puffer aus elastischem und/oder federndem Material zwischen der abzubremsenden Masse und dem beweglichen Teil des Brems- und Dämpfungselements angeordnet sein. Der Puffer wird wahlweise an einem der sich berührenden Teile angebracht, und dient zur Dämpfung der Schlaggeräusche beim Auftreffen der abzubremsenden Masse auf den Brems- und Dämpfungselement. Der Aufschlag der Masse auf den aktiven Dämpfungsteil verursacht durch die auch geringe Masse des Dämpfungsteiles ein Geräusch, das mittels eines gummiartigen oder federnd ausgestalteten weichen Pufferteiles, z. B. Kunststoffteil, vornehmlich in die vorhandenen Teile integriert, minimiert wird.

Natürlich kann das vorgeschlagene Brems- und Dämpfungselement mit anderen Brems- und Dämpfungseinrichtungen kombiniert werden.

Das erfindungsgemäße Brems- und Dämpfungselement ist in einem breiten Einsatzbereich verwendbar, z. B. in Scharnieren, Schubladenführungen, Möbelbändern sowie elektrisch oder durch Druckluft gesteuerte Werkzeuge und Montagemaschinen.

Die Erfindung wird nachfolgend an Hand mehrerer Ausführungsbeispiele unter Bezugnahme auf die Zeichnungen näher erläutert. Aus den Zeichnungen und ihrer Beschreibung ergeben sich weitere Merkmale und Vorteile der Erfindung.

Es zeigen:
- Fig. 1:: eine schematische perspektivische Ansicht des Brems- und Dämpfungselementes in einer ersten Ausführungsform;
- Fig. 2:: eine Schnittdarstellung des Brems- und Dämpfungselementes in einer Ausführungsform mit integriertem Rückstellorgan;
- Fig. 3:: eine weitere Ausführungsform des Brems- und Dämpfungselementes mit Rückstellorgan;
- Fig. 4:: eine Schnittdarstellung einer Ausführungsform des Brems- und Dämpfungselementes mit profilierten Oberflächen;
- Fig. 5:: eine Schnittdarstellung einer Ausführungsform des Brems- und Dämpfungselementes mit profilierten Oberflächen;
- Fig. 6:: eine Ausführungsform des Brems- und Dämpfungselementes mit mehreren, lamellenartigen, gegeneinander verschieblichen Teilen;
- Fig. 7:: eine Ausführungsform des Brems- und Dämpfungselementes mit in einer Führung geführten Bremsbacken;
- Fig. 8:: eine Ausführungsform des Brems- und Dämpfungselementes mit einer auf eine Lauffläche wirkende Bremsbacke;
- Fig. 9:: eine Ausführungsform des Brems- und Dämpfungselementes mit rotatorisch wirkendem beweglichen Teil;
- Fig. 10:: eine Ausführungsform des Brems- und Dämpfungselementes, integriert in eine Fangeinrichtung für Schubladenschienen.

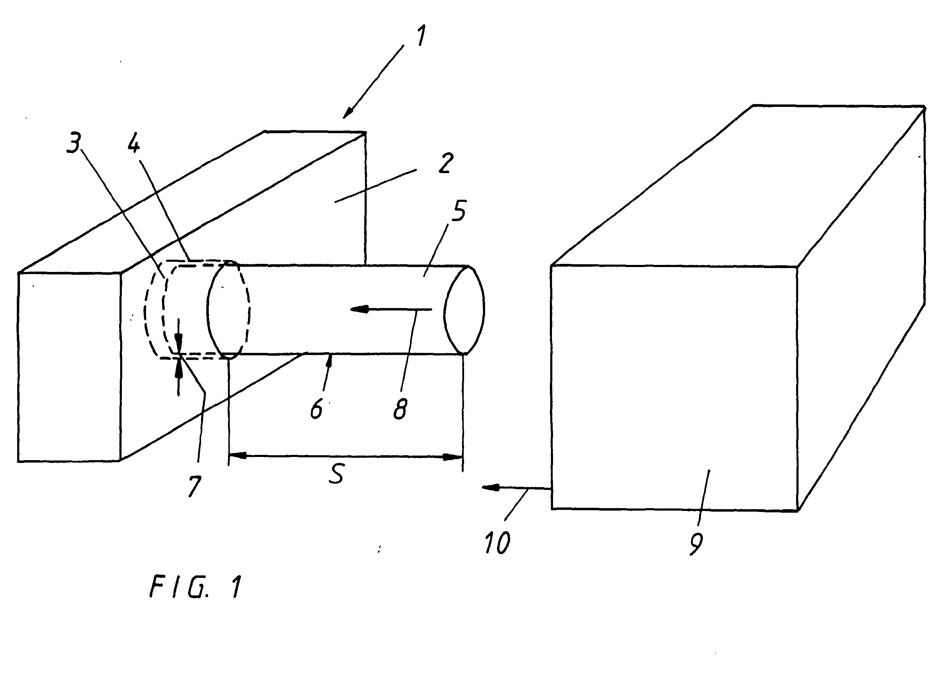

Figur 1 zeigt eine Ausführungsform des Brems- und Dämpfungselementes 1, im wesentlichen bestehend aus einem feststehenden Teil 2 und einem, gegenüber diesem feststehenden Teil 2 beweglichen, Teil 5. Das feststehende Teil 2 hat eine Ausnehmung, in diesem Fall eine Bohrung 3, in welcher das, z. B. zylindrisch ausgeführte, bewegliche Teil 5 geführt ist. Der Durchmesser der Bohrung 3 ist geringfügig größer, als der Außendurchmesser des beweglichen Teiles 5, so daß zwischen der Oberfläche 4 der Bohrung 3 und der Oberfläche 6 des beweglichen Teils 5 ein Spalt 7 verbleibt. Die Oberflächen 4 bzw. 6 sind mit einem hochviskosen Medium benetzt, welches den Spalt 7 im wesentlichen ausfüllt. Das hochviskose Medium haftet dabei an den benetzten Oberflächen 4, 6 und setzt einer Verschiebung der zueinanderbewegten Teile 2, 5 einen gewissen Widerstand entgegen, der abhängig ist von der Viskosität des Mediums, der Spaltbreite 7 sowie der Geschwindigkeit der zueinanderbewegten Teile 2, 5. Mit diesem Brems- und Dämpfungselement 1 soll eine bewegte Masse 9, welche sich in Pfeilrichtung 10 bewegt, innerhalb einer gewissen Wegstrecke s abgebremst werden. In der Ausgangsposition des Brems- und Dämpfungselementes 1 ist das bewegliche Teil 5 in Richtung zu der abzubremsenden Masse 9 gerichtet und ragt um die Wegstrecke s aus der Bohrung 3 des feststehenden Teils 2 heraus. Trifft die Masse 9 nun auf das bewegliche Teil 5 auf, so wird das hochviskose Medium durch seine Haftung an den beiden Oberflächen 4, 6 einer inneren Molekularreibung ausgesetzt, welche die kinetische Energie der abzufangenden Masse 9 in Reibungswärme umsetzt und die Masse 9 innerhalb der Wegstrecke s abbremst. Das bewegliche Teil 5 bewegt sich demnach in Pfeilrichtung 8 in die Bohrung 3 des feststehenden Teils 2 hinein und zwar um dieselbe Wegstrecke s.

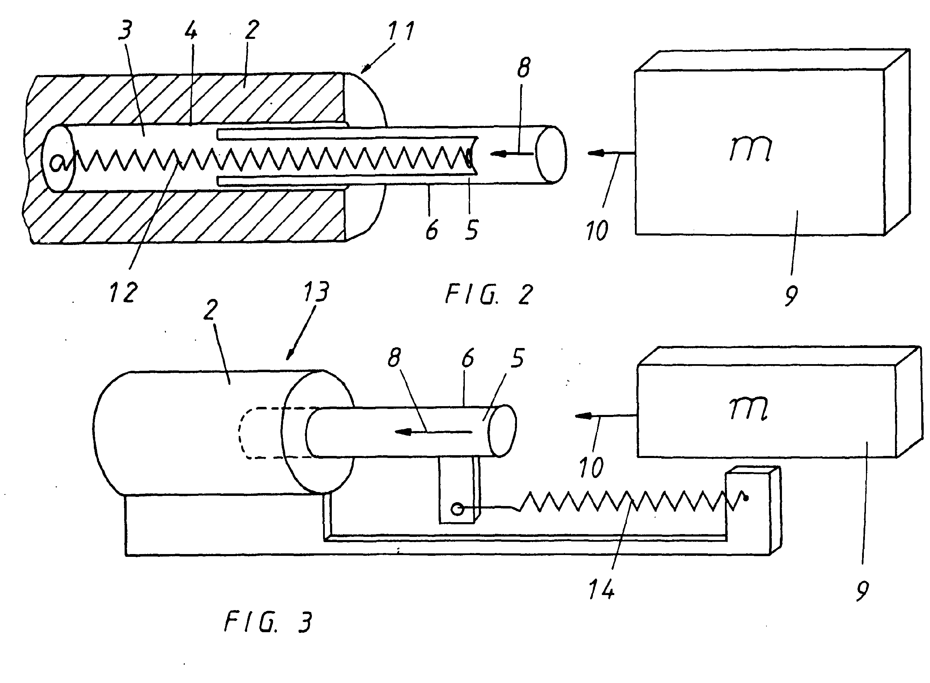

Die Figuren 2 und 3 zeigen hinsichtlich Figur 1 etwas abgewandelte schematische Ausführungsformen von Brems- und Dämpfungselementen 11 bzw. 13. Das Brems- und Dämpfungselement 11 umfaßt wiederum ein feststehendes Teil 2 mit einer zylindrischen Bohrung 3, in welcher teilweise das bewegliche Teil 5 eintaucht. Durch Beaufschlagung des beweglichen Teils 5 mit der abzubremsenden Masse 9 in Pfeilrichtung 10 taucht das bewegliche Teil 5 in Pfeilrichtung 8 in die Bohrung 3 des feststehenden Teils 2 ein. Für eine Rückstellung des beweglichen Teils 5 in seiner Ausgangsposition, wie sie in Figur 2 gezeigt ist, ist das bewegliche Teil teilweise als Hohlzylinder ausgebildet, wobei zwischen dem beweglichen Teil 5 und dem Grund der Bohrung 3 eine Druckfeder 12 angeordnet ist, welche derart dimensioniert ist, daß unter Überwindung der Reibungskräfte das bewegliche Teil wieder in seine Ausgangsposition zurückgestellt wird. Die Dauer, die für die Rückstellung benötigt wird, hängt natürlich von der gewählten Federkraft ab und kann je nach Einsatzzweck gewählt werden.

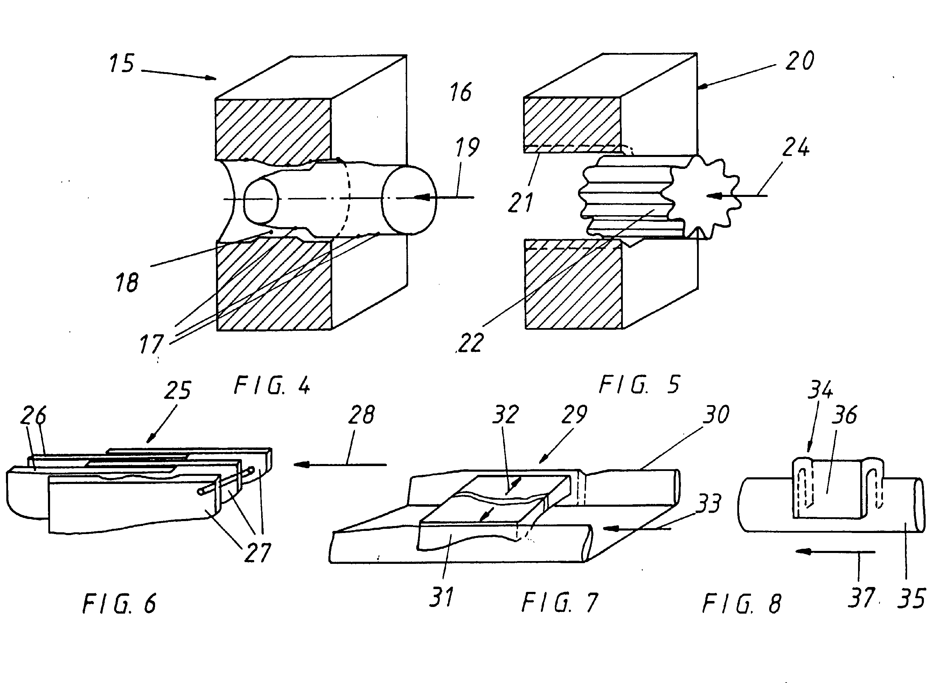

Figur 3 zeigt im wesentlichen dasselbe Prinzip wie Figur 2, jedoch wird hier als Rückstellorgan eine Zugfeder 14 eingesetzt, die zwischen einem festen Punkt und dem beweglichen Teil 5 angeordnet ist.
Die Brems- und Dämpfungscharakteristik des Brems- und Dämpfungselementes kann durch Profilierung der Oberflächenformen der zueinanderbeweglichen Teile gesteuert werden. Hierzu ist in Figur 4 ein Brems- und Dämpfungselement 15 gezeigt, dessen Oberfläche 16 des feststehenden Teiles eine bestimmte axiale Profilierung aufweist, d. h. dessen Querschnitt sich je nach Eindringtiefe verändert. Genauso kann das bewegliche Teil des Brems- und Dämpfungselementes eine profilierte Oberfläche 17 aufweisen, welche mit der profilierten Oberfläche 16 des feststehenden Teils in gewünschter Weise zusammenwirkt. Wird nun das bewegliche Teil in Pfeilrichtung in die Ausnehmung des feststehenden Teils durch die Kraft einer abzubremsenden Masse hineingeschoben, so ändert sich je nach Stellung des beweglichen Teils die Breite des Spaltes 18, wobei sich dementsprechend die Bremskraft ändert. So kann eine freiwählende Dämpfungskurve erreicht werden, die z. B. progressiv, degressiv, linear oder ein anderes spezifisches Verhalten aufweisen kann.

Figur 5 zeigt eine radiale Profilierung des beweglichen eines Dämpfungselementes 20, wobei die Ausnehmung im feststehenden Teil des Dämpfungselementes 20 eine entsprechend der Profilierung 22 gestaltete Profilierung 21 aufweist. Diese radiale Profilierung dient zur Oberflächenvergrößerung, was ermöglicht, das Brems- und Dämpfungselement 20 in seiner Baugröße zu reduzieren.

Figur 6 zeigt eine andere Ausgestaltung eines Brems- und Dämpfungselementes 25, bestehend aus mehreren feststehenden, im wesentlichen gerade ausgebildeten, dünnen Lamellen 26 und zugeordneten, im wesentlichen gerade ausgebildeten, dünnen, beweglichen Lamellen 27, wobei die Oberflächen der einander zugewandten Lamellen 26, 27 mit dem hochviskosen Medium benetzt sind. Die Wirkungsweise ist identisch wie weiter oben beschrieben. Werden die Lamellen 26, 27 gegeneinander bewegt, z. B. durch Krafteinwirkung in Pfeilrichtung 28, so setzt die Bremswirkung ein, die auf der inneren Molekularreibung des hochviskosen Mediums beruht.

Figur 7 zeigt eine weitere Ausführungsform eines Brems- und Dämpfungselementes 29 nach dem Prinzip einer Backenbremse. Es ist eine im Beispiel u-förmige Lauffläche 30 vorgesehen, in welcher eine Bremsbacke 31 verschieblich angeordnet ist. Die Breite der Bremsbacke 31 ist derart gewählt, daß zwischen Bremsbacke und der Wand der Lauffläche 30 ein Spalt verbleibt, der wiederum mit dem hochviskosen Medium benetzt ist. Wird die Bremsbacke 31 z. B. in Pfeilrichtung 33 gegenüber der Lauffläche 30 bewegt, so setzt die oben beschriebene Bremswirkung ein. Hierbei kann ein festes Spaltmaß oder insbesondere auch ein gesteuertes Spaltmaß eingesetzt werden, indem z. B. die Bremsbacke 31 zweiteilig ausgeführt ist und jedes Teil durch eine entsprechende Einrichtung in Pfeilrichtung 32 gegen die Laufflächen 30 gepreßt wird. Je größer die Preßwirkung ist, desto geringer ist der Spalt und desto größer die Bremswirkung.

Figur 8 zeigt ein Bremselement 34 in Form einer Außenbackenbremse mit einer Lauffläche 35, auf welcher eine Bremsbacke 36 aufgesetzt ist. Die Lauffläche bzw. die Bremsbackeninnenfläche ist mit dem hochviskosen Medium benetzt, so daß eine Kraftwirkung in Pfeilrichtung 37 den Bremsvorgang auslöst.

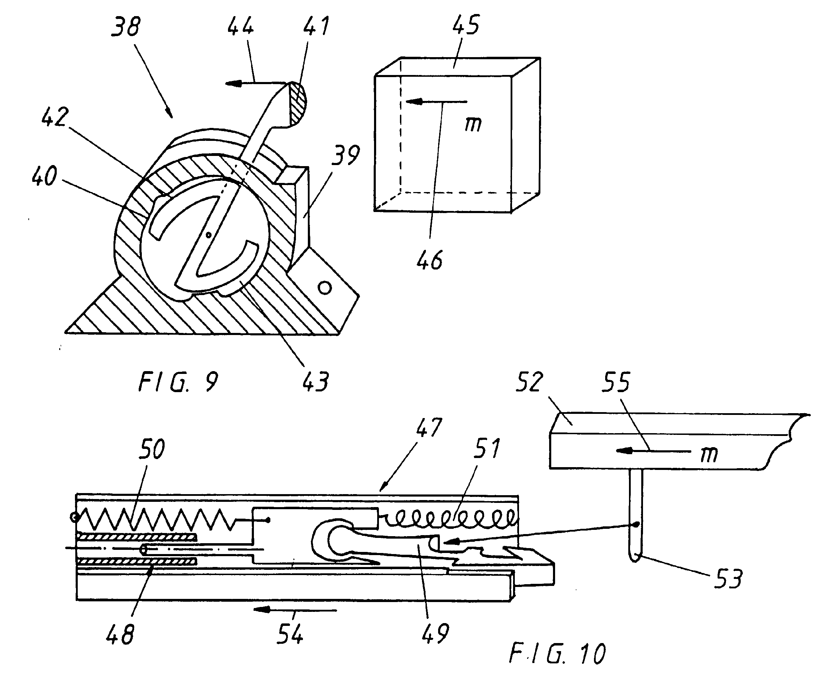

Im Unterschied zu einer linearen Abbremsbewegung wie in den vorbeschriebenen Ausführungsbeispielen zeigt Figur 9 eine Ausführung eines Bremselementes 38, in welcher ein bewegliches Teil 41 drehbar innerhalb eines feststehenden Teiles 39 geführt ist. Zwischen der inneren Oberfläche 40 des feststehenden Teiles 39 und der äußeren Oberfläche 42 des beweglichen Teiles 41 bildet sich in bekannter Weise der Spalt 43, welcher im wesentlichen mit einem hochviskosen Medium gefüllt ist. Eine abzubremsende Masse 45 trifft in Pfeilrichtung 46 auf das bewegliche Teil 41, welches sich nun um seine Rotationsachse in Pfeilrichtung 44 bewegt und die Masse 45 abbremst.

Figur 10 zeigt eine Fangvorrichtung 47 für Schubladen, welche mit einem erfindungsgemäßen Brems- und Dämpfungselement 48 ausgestattet ist. Die Fangvorrichtung 47 weist ein halboffenes Gehäuse auf, in welchem ein Fanghebel 49 in Pfeilrichtung 54 bzw. in der Gegenrichtung verschieblich geführt ist. Das Brems- und Dämpfungselement 48 ist im wesentlichen gemäß der vorbeschriebenen Figur 2 bzw. Figur 3 ausgebildet. Bei der beweglichen Masse 52 handelt es sich um eine Schublade, welche mit einem Fangbolzen 53 versehen ist, der beim Schließen der Schublade in den Fanghebel 49 eingreift. Dadurch bewegt sich der Fanghebel 49 in Pfeilrichtung 54, mit der Geschwindigkeit der Masse 52, wodurch die Bremswirkung des Brems- und Dämpfungselementes 48 einsetzt und die Masse 52 abbremst. Durch Federkraft mit einer Zugfeder 50 bzw. Druckfeder 51 wird die Masse 52 aktiv bis zum Endanschlag bewegt. Die Geschwindigkeit der Bewegung ist frei wählbar durch die konstruktive Auslegung des Dämpfungswiderstandes des Brems- und Dämpfungselementes 48 sowie der Federkraft.

### Zeichnungslegende

- 1: Brems- und Dämpfungselement
- 2: Feststehendes Teil
- 3: Bohrung
- 4: Oberfläche
- 5: Bewegliches Teil
- 6: Oberfläche
- 7: Spalt/Abstand
- 8: Pfeilrichtung
- 9: Masse
- 10: Pfeilrichtung
- 11: Brems- und Dämpfungselement
- 12: Druckfeder
- 13: Brems- und Dämpfungselement
- 14: Zugfeder
- 15: Brems- und Dämpfungselement
- 16: Oberfläche (fest)
- 17: Oberfläche (bewegl.)
- 18: Spalt/Abstand
- 19: Pfeilrichtung
- 20: Brems- und Dämpfungselement
- 21: Oberfläche (fest)
- 22: Oberfläche (bewegl.)
- 23: Spalt/Abstand
- 24: Pfeilrichtung
- 25: Brems- und Dämpfungselement
- 26: Lamellen (fest)
- 27: Lamellen (bewegl.)
- 28: Pfeilrichtung
- 29: Brems- und Dämpfungselement
- 30: Lauffläche
- 31: Bremsbacke
- 32: Kraft
- 33: Pfeilrichtung
- 34: Brems- und Dämpfungselement
- 35: Lauffläche
- 36: Bremsbacke
- 37: Pfeilrichtung
- 38: Brems- und Dämpfungselement
- 39: Feststehendes Teil
- 40: Oberfläche
- 41: Bewegliches Teil
- 42: Oberfläche
- 43: Spalt/Abstand
- 44: Pfeilrichtung
- 45: Masse
- 46: Pfeilrichtung
- 47: Fangvorrichtung
- 48: Brems- und Dämpfungselement
- 49: Fanghebel
- 50: Zugfeder
- 51: Druckfeder
- 52: Masse
- 53: Bolzen
- 54: Pfeilrichtung
- 55: Pfeilrichtung

## Patentansprüche

1. Brems- und Dämpfungselement für Möbel zum kontrollierten Abbremsen einer bewegten Masse, mit mindestens einem feststehenden und einem beweglichen Teil (2, 5), wobei das bewegliche Teil (5) von der abzubremsenden Masse (9) beaufschlagt wird und gegenüber dem feststehenden Teil (2) um eine definierte Wegstrecke verschiebbar ist, wobei die Teile (2, 5) eine oder mehrere einander zugewandte, einen bestimmten Abstand voneinander einnehmende, Oberflächen (4, 6) aufweisen und die Oberflächen (4, 6) mit einem eine hochviskose Flüssigkeit beinhaltenden Medium benetzt sind, **dadurch gekennzeichnet, dass** das hochviskose Medium eine Viskosität von etwa zehntausend bis mehreren Millionen Pa·s besitzt.

2. Brems- und Dämpfungselement nach Anspruch 1, **dadurch gekennzeichnet, daß** die Reibungszahl des Mediums von der Geschwindigkeit der zueinanderbewegbaren Teile (2, 5) abhängt.

3. Brems- und Dämpfungselement nach Anspruch 1 oder 2, **dadurch gekennzeichnet, daß** eines der Teile (2; 5) eine Ausnehmung (3) beliebigen Querschnitts aufweist, in welcher das im wesentlichen denselben Querschnitt aufweisende andere Teil (5; 2) verschiebbar gehalten ist, wobei zwischen der Oberfläche (4) der Ausnehmung (3) und der Oberfläche (6) des darin aufgenommenen Teils (5; 2) ein Spalt (7) vorhanden ist, in welchem sich das Medium befindet.

4. Brems- und Dämpfungselement Anspruch 3, **dadurch gekennzeichnet, daß** der größte Durchmesser des einen Teils (5; 2) um die doppelte Breite des Spalts (7) geringer ist, als der kleinste Durchmesser der Ausnehmung (3), in der es geführt ist.

5. Brems- und Dämpfungselement nach einem der Ansprüche 1 bis 4, **dadurch gekennzeichnet, daß** die Ausnehmung (3) und/oder die Oberfläche (6) des in der Ausnehmung (3) geführten Teils (5; 2) axial und/oder radial profiliert sind.

6. Brems- und Dämpfungselement nach Anspruch 1 oder 2, **dadurch gekennzeichnet, daß** es mehrere gegeneinander bewegliche Lamellen (26, 27) umfaßt.

7. Brems- und Dämpfungselement nach Anspruch 1 oder 2, **dadurch gekennzeichnet, daß** es als Backenbremse (29) in Innen- oder Außenbackenform ausgebildet ist.

8. Brems- und Dämpfungselement nach Anspruch 6 oder 7, **dadurch gekennzeichnet, daß** die Oberflächen der Lamellen (26, 27) und/oder Bremsbacken (31) und/oder die jeweiligen Gegenflächen (30) profiliert sind.

9. Brems- und Dämpfungselement nach einem der Ansprüche 1 bis 8, **dadurch gekennzeichnet, daß** es ein auf das bewegliche Teil (5) wirkendes Rückstellorgan (12; 14) umfaßt.

10. Brems- und Dämpfungselement nach Anspruch 9, **dadurch gekennzeichnet, daß** das Rückstellorgan (12; 14) als Federelement ausgebildet ist.

11. Brems- und Dämpfungselement nach einem der Ansprüche 1 bis 10, **dadurch gekennzeichnet, daß** ein Rückstellfreilauf zur zwangsweisen Aufhebung der Bremswirkung vorgesehen ist.

12. Brems- und Dämpfungselement nach einem der Ansprüche 1 bis 11, **dadurch gekennzeichnet, daß** ein Puffer aus elastischem und/oder federndem Material zwischen der abzubremsenden Masse (9) und dem beweglichen Teil (5) des Brems- und Dämpfungselements angeordnet ist.

13. Verwendung eines Brems- und Dämpfungselements (48) nach einem der Ansprüche 1 bis 12, **dadurch gekennzeichnet, dass** das Brems- und Dämpfungselement (48) in Schubladen (52), insbesondere an deren Führungen eingesetzt wird, und insbesondere in Fangvorrichtungen (47) für Schubladen (52).

## Claims

1. Braking and damping element for furniture for controlled braking of a moving mass, with at least one fixed and one movable part (2, 5), wherein the movable part (5) is acted upon by the mass (9) to be braked and is displaceable relative to the fixed part (2) by a defined distance, the parts (2, 5) having one or more surfaces (4, 6) facing one another and adopting a specific spacing with respect to one another and the surfaces (4, 6) being wetted with a medium containing highly viscous liquid, **characterised in that** the highly viscous medium has a viscosity of about ten thousand to several million Pa·s.

2. Braking and damping element according to claim 1, **characterised in that** the coefficient of friction of the medium depends on the speed of the parts t (2, 5) which can be moved toward one another.

3. Braking and damping element according to claim 1 or 2, **characterised in that** one of the parts (2; 5) has a recess (3) of any desired cross-section, in which the other part (5; 2) having substantially the same cross-section is displaceably held, a gap (7), in which the medium is located, being present between the surface (4) of the recess (3) and the surface (6) of the part (5; 2) received therein.

4. Braking and damping element according to claim 3, **characterised in that** the largest diameter of one part (5; 2) is smaller by twice the width of the gap (7) than the smallest diameter of the recess (3) in which it is guided.

5. Braking and damping element according to any one of claims 1 to 4, **characterised in that** the recess (3) and/or the surface (6) of the part (5; 2) guided in the recess (3) are axially and/or radially profiled.

6. Braking and damping element according to claim 1 or 2, **characterised in that** it comprises a plurality of slats (26, 27) which can be moved with respect to one another.

7. Braking and damping element according to claim 1 or 2, **characterised in that** it is configured as a block brake (29) in an inner or outer block form.

8. Braking and damping element according to claim 6 or 7, **characterised in that** the surfaces of the slats (26, 27) and/or block brakes (37) and/or the respective counter-faces (30) are profiled.

9. Braking and damping element according to any one of claims 1 to 8, **characterised in that** it comprises a restoring member (12; 14) acting on the movable part (5).

10. Braking and damping element according to claim 9, **characterised in that** the restoring member (12; 14) is configured as a spring element.

11. Braking and damping element according to any one of claims 1 to 10, **characterised in that** a restoring override for enforced cancellation of the braking effect is provided.

12. Braking and damping element according to any one of claims 1 to 11, **characterised in that** a buffer made of elastic and/or resilient material is arranged between the mass (9) to be braked and the movable part (5) of the braking and damping element.

13. Use of a braking and damping element (48) according to any one of claims 1 to 12, **characterised in that** the braking and damping element (48) is inserted in drawers (52), in particular on their guides, and in particular in catching devices (47) for drawers (52).

## Revendications

1. Elément de freinage et d'amortissement pour meuble pour le freinage contrôlé d'une masse déplacée, avec au moins un élément fixe et un élément mobile (2, 5), l'élément mobile (5) étant contraint par la masse à freiner (9) et étant apte à coulisser par rapport à l'élément fixe (2) sur une distance définie, les éléments (2, 5) présentant une ou plusieurs surfaces (4, 6) tournées l'une vers l'autre et présentant un écartement mutuel défini, et les surfaces (4, 6) étant humectées avec un produit contenant un liquide très visqueux, **caractérisé en ce que** le produit très visqueux a une viscosité d'environ dix mille à plusieurs millions de Pa·s.

2. Elément de freinage et d'amortissement selon la revendication 1, **caractérisé en ce que** le coefficient de frottement du produit dépend de la vitesse des éléments (2, 5) aptes à être déplacés l'un par rapport à l'autre.

3. Elément de freinage et d'amortissement selon la revendication 1 ou 2, **caractérisé en ce que** l'un des éléments (2 ; 5) présente un creux (3) à section transversale quelconque dans lequel l'autre élément (5 ; 2), qui présente sensiblement la même section transversale, est apte à coulisser, étant précisé qu'il y a entre la surface (4) du creux (3) et la surface (6) de l'élément (5 ; 2) logé dans celui-ci un interstice (7) dans lequel se trouve le produit.

4. Elément de freinage et d'amortissement selon la revendication 3, **caractérisé en ce que** le diamètre maximal d'un élément (5 ; 2) est inférieur d'une valeur égale à deux fois la largeur de l'interstice (7) au diamètre minimal du creux (3) dans lequel il est guidé.

5. Elément de freinage et d'amortissement selon l'une des revendications 1 à 4, **caractérisé en ce que** le creux (3) et/ou la surface (6) de l'élément (5 ; 2) guidé dans le creux (3) sont profilés axialement et/ou radialement.

6. Elément de freinage et d'amortissement selon la revendication 1 ou 2, **caractérisé en ce qu'**il comprend plusieurs lamelles (26, 27) mobiles les unes par rapport aux autres.

7. Elément de freinage et d'amortissement selon la revendication 1 ou 2, **caractérisé en ce qu'**il est conçu comme un frein à mâchoire (29) sous la forme d'une mâchoire intérieure ou extérieure.

8. Elément de freinage et d'amortissement selon la revendication 6 ou 7, **caractérisé en ce que** les surfaces des lamelles (26, 27) et/ou les mâchoires de frein (31) et/ou les surfaces opposées respectives (30) sont profilées.

9. Elément de freinage et d'amortissement selon l'une des revendications 1 à 8, **caractérisé en ce qu'**il comprend un organe de rappel (12 ; 14) qui agit sur l'élément mobile (5).

10. Elément de freinage et d'amortissement selon la revendication 9, **caractérisé en ce que** l'organe de rappel (12 ; 14) est conçu comme un élément à ressort.

11. Elément de freinage et d'amortissement selon l'une des revendications 1 à 10, **caractérisé en ce qu'**il est prévu un mécanisme de course libre de rappel pour la suppression forcée de l'action de freinage.

12. Elément de freinage et d'amortissement selon l'une des revendications 1 à 11, **caractérisé en ce qu'**un tampon en matière élastique et/ou à ressort est disposé entre la masse à freiner (9) et l'élément mobile (5) de l'élément de freinage et d'amortissement.

13. Utilisation d'un élément de freinage et d'amortissement (48) selon l'une des revendications 1 à 12, **caractérisée en ce que** l'élément de freinage et d'amortissement (48) est placé dans des tiroirs (52), en particulier sur les guides de ceux-ci, et en particulier dans des dispositifs d'arrêt (47) pour des tiroirs (52).
